# EUROPEAN PATENT SPECIFICATION

(11) **EP 2 090 506 B1**
(45) Date of publication and mention of the grant of the patent: **28.04.2010**
(21) Application number: 08425082.8
(22) Date of filing: 12.02.2008
(51) Int. Cl.: B63B 59/06, B05B 13/04, B05B 15/10, B66F 11/00, B66F 7/08

(54) **Mobile device for working hulls of marine vessels**
Mobile Vorrichtung zum Bearbeiten von Wasserfahrzeughüllen
Dispositif mobile pour les coques travaillantes de bâtiments de la marine

(43) Date of publication of application: 19.08.2009
(73) Proprietor: Rina, Vincenzo, 80100 Napoli (IT)
(72) Inventor: Rina, Vincenzo, 80100 Napoli (IT)
(74) Representative: Brogi, Graziano

(56) References cited:
- EP-A- 1 813 354
- WO-A-2007/141320
- JP-A- 60 219 194
- US-A- 5 358 568
- US-A- 6 102 157

## Description

The present invention relates to a mobile device for working hulls of marine vessel.

Devices of the mobile and fixed type for surface working of hulls of marine vessels are currently known.

Some of these devices are disclosed in US-6,562,139 and in IT-0001275279.

US-6,562,139 discloses a device for finishing the hulls of marine vessels which comprises a plurality of anthropomorphic robots which can move with respect to the hull along one or more fixed guides and are provided with interchangeable tools adapted to perform various operations, such as the mapping of the surface of the hull, painting it and performing surface finishing operations.

The guides with which the devices known from US-6,562,139 engage are generally provided on masonry present in the shipyard in which the vessel is placed or in any case on structures which are fixed with respect to the vessel to be worked and therefore allow the movement of the robots exclusively along the directions defined thereby.

The fixed structures on which the guides for the sliding of the robots are formed further allow to contrast and cancel any reaction forces generated during work and directed at right angles to the working tool; such forces might in fact generate oscillations or vibrations on the tool and accordingly generate imperfections on the worked regions.

IT-0001275279 instead discloses a self-propelled robotized device for maintaining the walls of the hulls of marine vessels.

Such device comprises a supporting structure, from which a plurality of mechanical locomotion limbs and a working arm protrude, said working arm being able to slide with respect to the supporting structure along preset directions and being adapted to perform surface work.

The locomotion limbs of the device disclosed in IT-0001275279 are provided with wall fixing means which allow said device to move on the walls of the hull.

The wall fixing means allow the device to move on surfaces having any orientation.

The device disclosed in this patent, therefore, moves directly on the hull, shifting according to the regions to be worked.

These known devices are not free from drawbacks, including the fact that the device disclosed in US-6,562,139 requires the execution of building work or heavy structural work needed to provide the fixed structures on which the sliding guides for the robots that perform surface work are then formed. The provision of such masonry or structural work, which permanently modifies the appearance and structure of the shipyard, entail not only high investment costs but also the use of personnel and machines which can hinder and limit the normal execution of work within the shipyard.

Another drawback of the device disclosed in US-6,562,139 is that its use is scarcely flexible.

Such device is in fact unable to adapt to the dimensions and shape of the hull; the length of the guides and their mutual positioning in fact limit the type of vessel that can be worked. Further, the presence of the sliding guides considerably limits the range of action of the robots. This entails that in order to work large surfaces it can be necessary to use a plurality of mutually parallel guides.

Also the device disclosed in IT-0001275279 is not free from drawbacks, including the fact that the range of action of its working arm is extremely limited. In fact, the surface worked by the described device does not comprise the regions where the locomotion limbs rest and the region below the supporting structure, since they are not accessible to the working arm.

Further, the positioning and locking on the surface of the hull are very complicated, since the sequence for moving the locomotion limbs must follow a precise order, which provides for lifting, moving and fixing first the front limbs and then the rear limbs.

It is therefore easy to understand that the working of medium-large surfaces requires considerable movements of said device and therefore a considerable expenditure of time, the logical consequence of which is a reduction in productivity and an increase in working costs.

WO 2007/141320 discloses a robot for treating a surface having a combination of elements as set forth in the pre-characterizing portion of the appended claim 1.

The aim of the present invention is to eliminate the above-mentioned drawbacks of the background art, by providing a mobile device for working hulls of marine vessels which does not require the provision of building work or structural work in the shipyard, so as to considerably reduce the investment costs and allow easy management of the shipyard.

Within this aim, an object of the present invention is to provide a mobile device for working hulls which is characterized by a great flexibility in use, i.e., is capable of easily adapting itself to the dimensions and shape of the vessels to be machined and can be easily moved from one shipyard to another.

Another object of the present invention is to provide a device which is capable of performing, in a considerably shorter time than known devices, in particular the device disclosed in IT-0001275279, the working of all the surfaces of a hull, especially of a medium-large size one, consequently improving productivity and reducing working costs.

Another object of the present invention is to provide a device which is simple, relatively easy to provide in practice, safe in use, effective in operation, and has a relatively low cost.

In accordance with the invention, there is provided a mobile device for working hulls of marine vessels, as defined in the appended claims.

Further characteristics and advantages of the present invention will become better apparent from the following detailed description of a preferred but not exclusive embodiment of a device according to the invention, illustrated by way of non-limiting example in the accompanying drawings, wherein:
Figure 1 is a perspective view of a device according to the invention in a first embodiment, with the supporting element in the lowered position;
Figure 2 is a side elevation view of the device according to the invention of Figure 1;
Figure 3 is a longitudinal sectional side elevation view of the device according to the invention of Figure 1;
Figure 4 is a front elevation view of the device according to the invention of Figure 1;
Figure 5 is a perspective view of the device according to the invention of Figure 1, with the supporting element in the raised position;
Figure 6 is a side elevation view of the device according to the invention of Figure 5;
Figure 7 is a longitudinal sectional side elevation view of the device according to the invention of Figure 5;
Figure 8 is a front elevation view of the device according to the invention of Figure 5;
Figure 9 is a side elevation view of the device according to the invention in a second embodiment, with the supporting element in the lowered position;
Figure 10 is a front elevation view of the device according to the invention of Figure 9.

With reference to the figures, the reference numeral 1 generally designates a mobile device for working hulls of marine vessels, particularly of medium-large size.

The device 1 comprises a supporting structure 2, which is preferably elongated, and at least one anthropomorphic robot 3, which is provided with means 4 for the surface working of the hull of at least one vessel I', I".

The robot 3 is supported by the supporting structure 2 and can move with respect to it along at least one preset direction, which is indicated in the various figures by means of a double arrow 5 and is preferably parallel to the longitudinal extension of the supporting structure 2.

The working means 4 with which the robot 3 is provided are mutually interchangeable as a function of the type of work to be performed, such as for example roughing of the surface of the hull, sanding, painting and mapping the surface of the hull.

According to the invention, the device 1 comprises means for moving the supporting structure 2 on a resting surface P which lies outside the vessel I', I", said means being directionally independent of said resting surface, i.e., being able to move in any direction with respect to the resting surface P.

In a preferred embodiment, shown in the figures, the supporting structure 2, which has a substantially rectangular shape, has a central longitudinal plane and the movement means are constituted by a plurality of wheels 6, which are symmetrically arranged with respect to said longitudinal central plane and are positioned at the end regions of the supporting structure 2.

The wheels 6 are pivoted in pairs to the supporting structure 2 about respective rotation axes which are arranged at right angles to the resting surface P, so as to be able to be oriented with respect to it in any direction.

Advantageously, the device 1 comprises means for adjusting the rotation of the wheels 6 about the respective rotation axes, constituted for example by a hydraulic cylinder 7 for each pair of wheels 6 which has the same axis of rotation as said pair of wheels.

More particularly, each hydraulic cylinder 7 is rigidly associated by means of its body 7a with the supporting structure 2 and by means of a stem 7b of its piston with the connecting arm of the corresponding pair of wheels 6.

The wheels 6 allow to position the supporting structure 2 so that it is substantially laterally adjacent to the vessel I', I", so that the preset direction 5 is substantially parallel to the vessel I', I".

Advantageously, the device 1 comprises at least one element 8 for supporting the robot 3, which is connected to the supporting structure 2 and forms a supporting surface 8a for the robot.

Preferably, the device 1 comprises means for lifting the supporting element 8 with respect to the supporting structure 2 which are adapted to move it from a lowered position to a raised position and vice versa.

More particularly, the lifting means are of the hydraulic type and comprise for example at least one scissor lift 11a, 11b, which is actuated by one or more hydraulic cylinders 9, each of which is pivoted by means of an axial end of its body 9a to the supporting structure 2 and by means of the stem 9b of its piston to the supporting element 8.

Conveniently, the lifting means comprise two pairs of hydraulic cylinders 9, which face each other and are arranged on mutually opposite sides with respect to the transverse central plane of the supporting structure 2.

The hydraulic cylinders 9 are inclined with respect to the supporting surface 8a both when the supporting element 8 is in the lowered position and when it is in the raised position.

More particularly, the hydraulic cylinders 9 are fed by a hydraulic main circuit, which is driven by a motor 10 which is arranged on the supporting structure 2 and sends pressurized oil to such circuit.

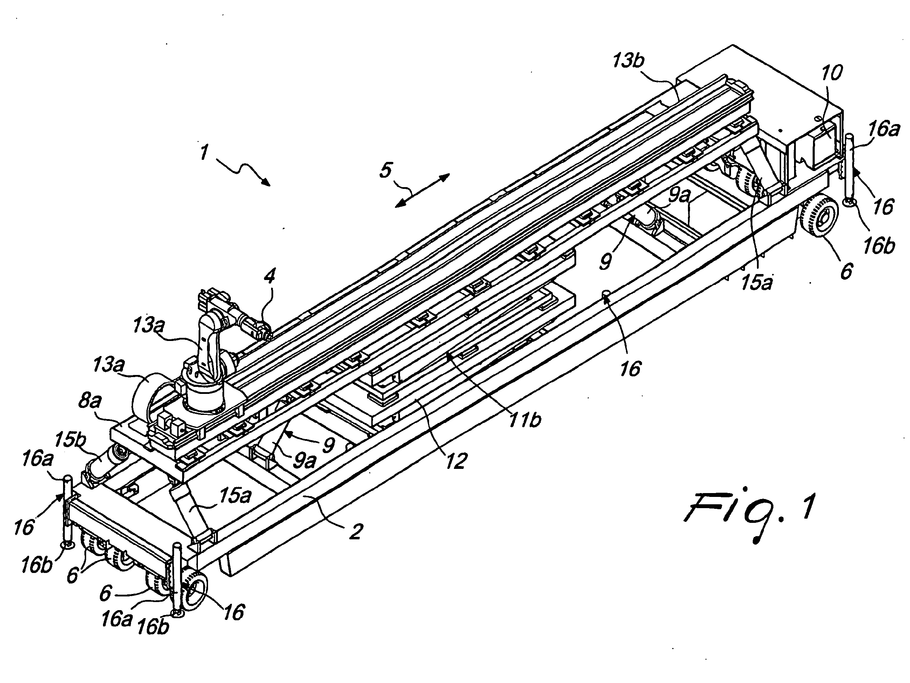

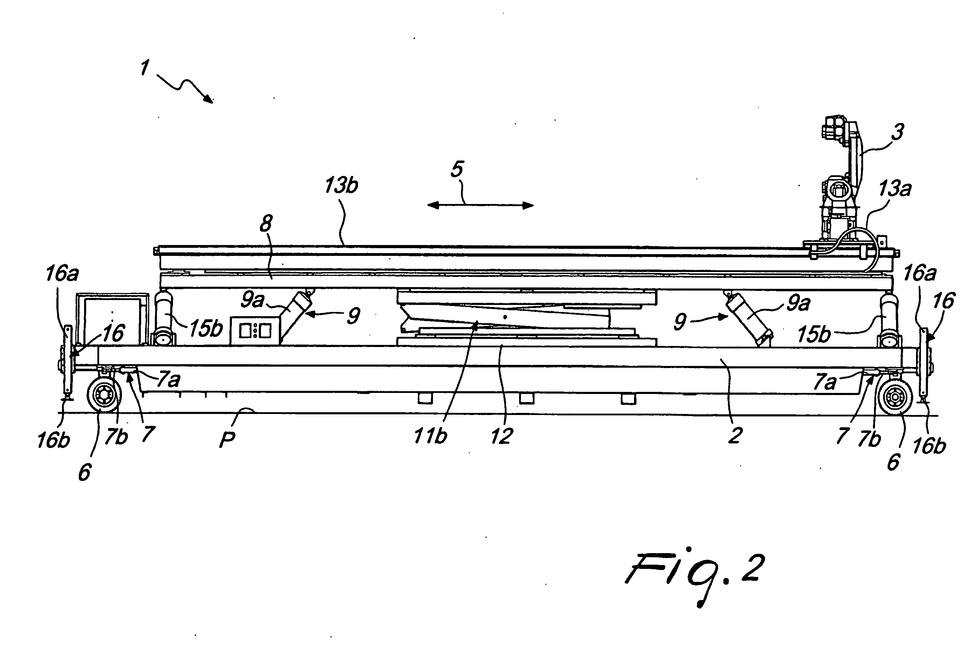

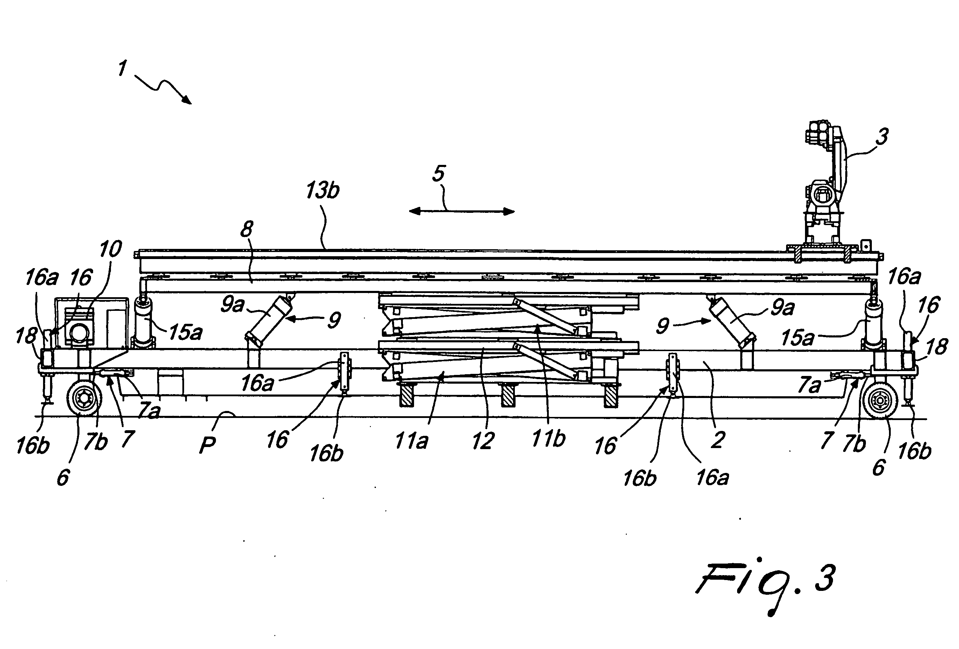

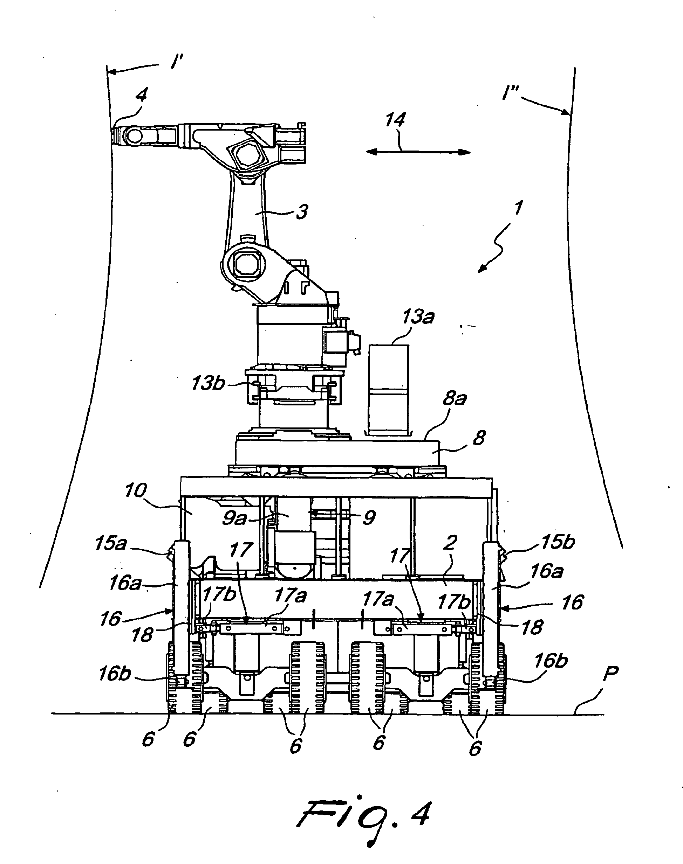

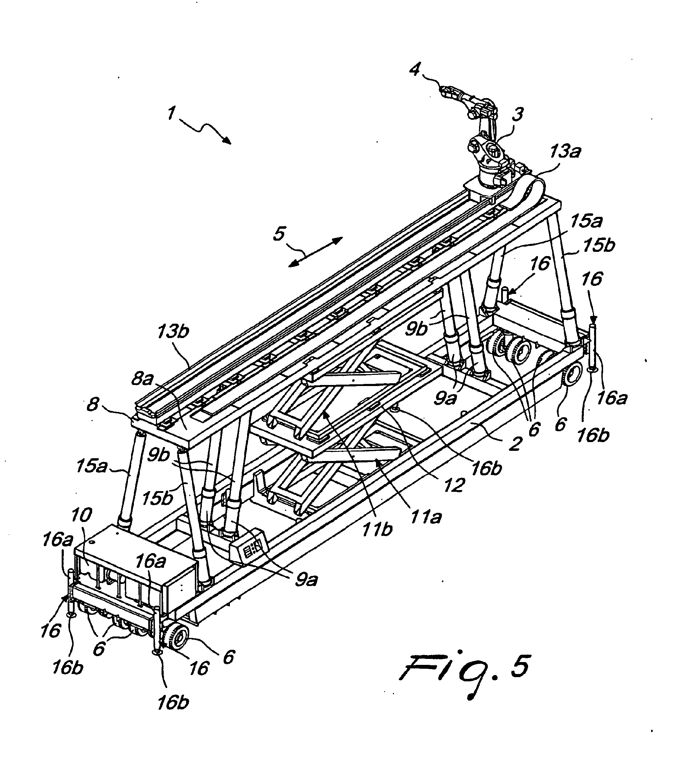

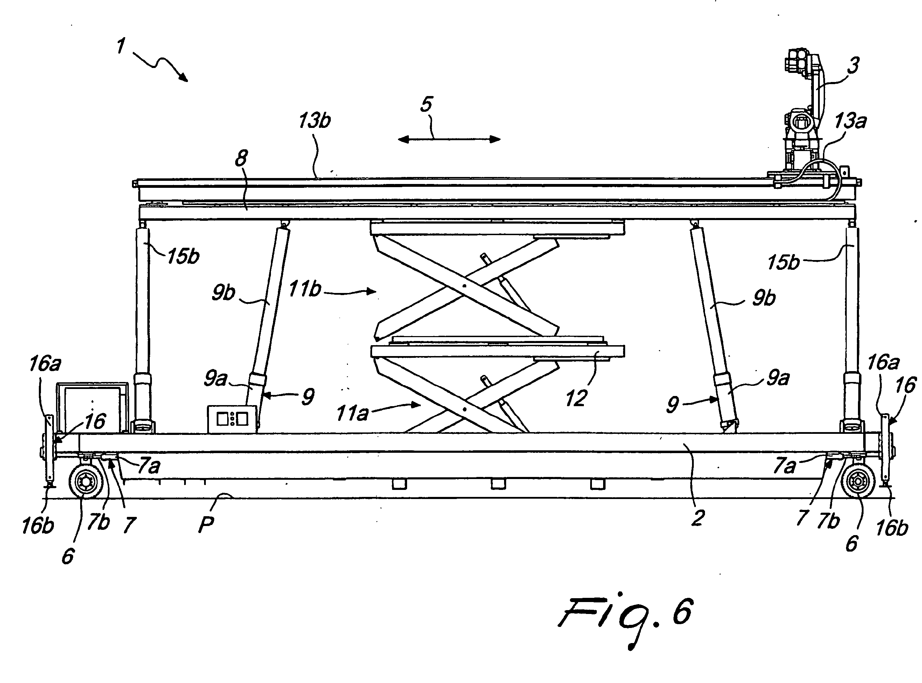

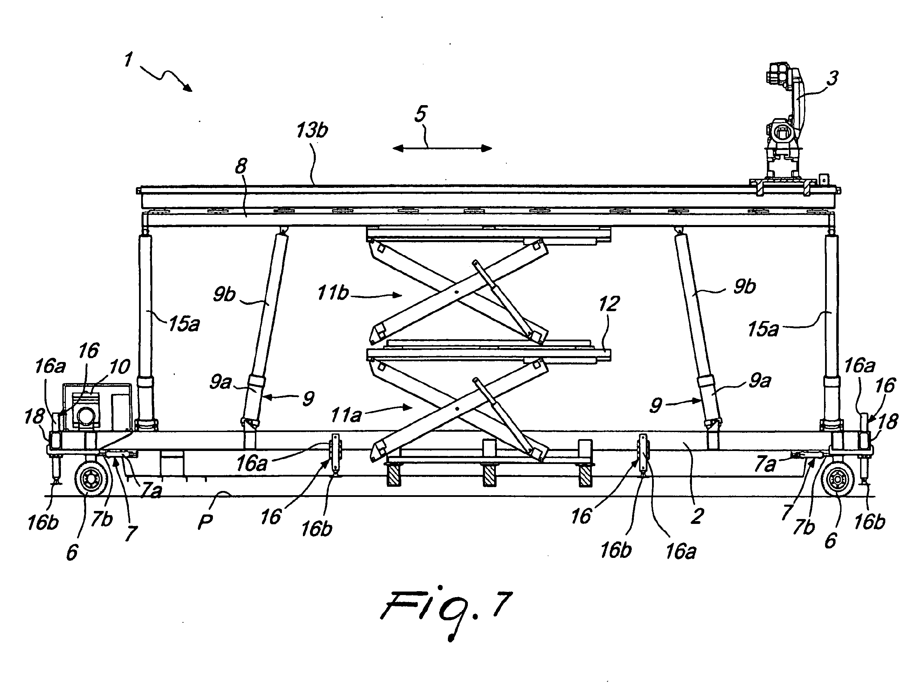

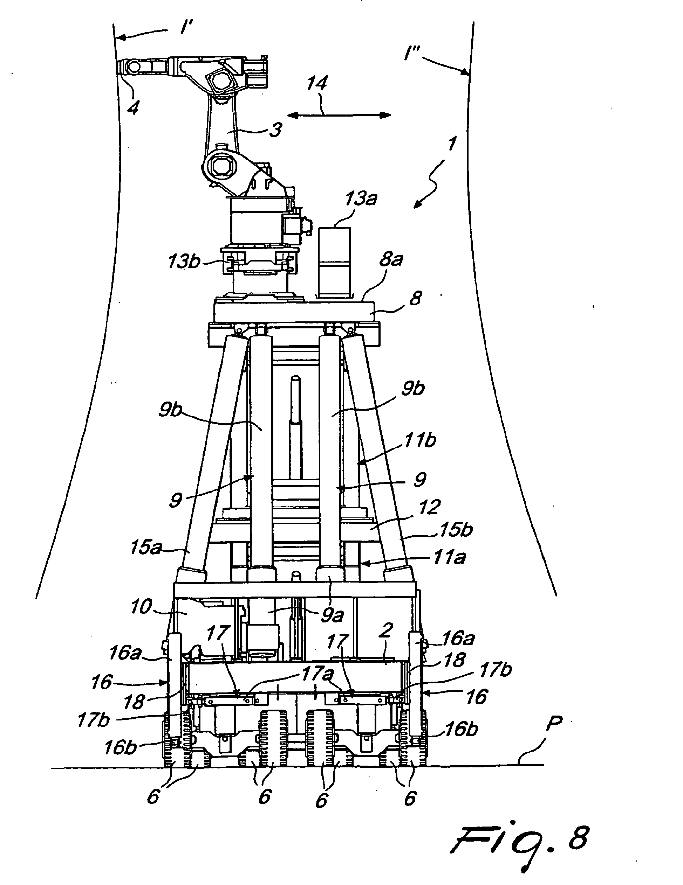

In the embodiments shown in Figures 1 to 10, the lifting means comprise two scissor lifts, respectively a first scissor lift 11a and a second scissor lift 11b, which are mutually superimposed and separated by an intermediate element 12.

The levers of the first scissor lift 11a are interposed between the supporting structure 2 and the intermediate element 12 and the levers of the second scissor lift 11b are interposed between the intermediate element 12 and the supporting element 8.

The scissor lifts 11a and 11b allow therefore to adjust at will the height of the robot 3 with respect to the vessel I', I".

Advantageously, the device 1 further comprises means for the translational motion of the robot 3 with respect to the supporting element 8 along the preset direction 5, which are conveniently interposed between the supporting surface 8a and the robot.

In the embodiments shown in Figures 1 to 10, the means for translational motion are constituted by a flexible guide 13a, which is moved by means of one or more gearmotors, not shown in the figures, and by a rail 13b, which runs longitudinally along the sliding direction 5 and is interposed between the robot 3 and the supporting surface 8a, with which such robot engages slidingly.

The translational means allow therefore to move the robot 3 with respect to the vessel I', I" along the preset direction 5, keeping the supporting structure 2 stationary.

The combined movement of the robot 3 along two mutually substantially perpendicular directions, caused by the lifting means and by the translational means, allows to work a large surface of the hull without moving the supporting structure 2.

The device 1 comprises means for stabilizing the supporting element 8, which are adapted to contrast the forces, or components thereof, that act along a reaction direction 14 which is substantially parallel to the supporting surface 8a and substantially perpendicular to the preset direction 5.

In a first embodiment, shown in figures 1 to 8, the stabilizing means comprise at least one first hydraulic actuator 15a, which is interposed between the supporting structure 2 and the supporting element 8.

Advantageously, the axis of the first actuator 15a is inclined with respect to the supporting surface 8a so as to contrast the forces that act along the reaction direction 14 and are oriented from the worked surface of a first vessel I' toward the robot 3.

Since the robot 3 can rotate about itself even through 180°, it is capable of performing work also on a second vessel I" arranged on the opposite side of the first vessel I' with respect to the supporting structure 2.

Conveniently, therefore, the stabilizing means comprise at least one second hydraulic actuator 15b, which is interposed between the supporting structure 2 and the supporting element 8 and is arranged symmetrically to the first actuator 15a with respect to the longitudinal central plane of the supporting structure 2, so as to contrast the forces that act along the reaction direction 14 and are oriented from the worked surface of the second vessel I" toward the robot 3.

Advantageously, as shown in Figures 1 to 8, the stabilizing means comprise at least two first actuators 15a and at least two second actuators 15b, which are mutually respectively aligned and parallel.

Preferably, the first and second actuators 15a and 15b are constituted by hydraulic cylinders, which are associated by means of their body with the supporting structure 2 and by means of the stem of their piston with the supporting element 8.

The first and second actuators 15a and 15b, for example of the hydraulic type, are supplied by a secondary hydraulic circuit driven by the motor 10, which sends oil to such secondary circuit at a lower pressure than the pressure in the main circuit that feeds the hydraulic cylinders 9 which move the first and second scissor lifts 11a and 11b.

The first and second actuators 15a and 15b therefore do not push the supporting element 8, which is moved by the hydraulic cylinders 9.

The oil, sent by the motor 10 into the secondary circuit during the lifting of the supporting element 8, ensures the escape of any air bubbles present in said secondary circuit, so that the actuators 15a and 15b, during the operation of the robot 3, are capable of contrasting the forces that act along the reaction direction 14.

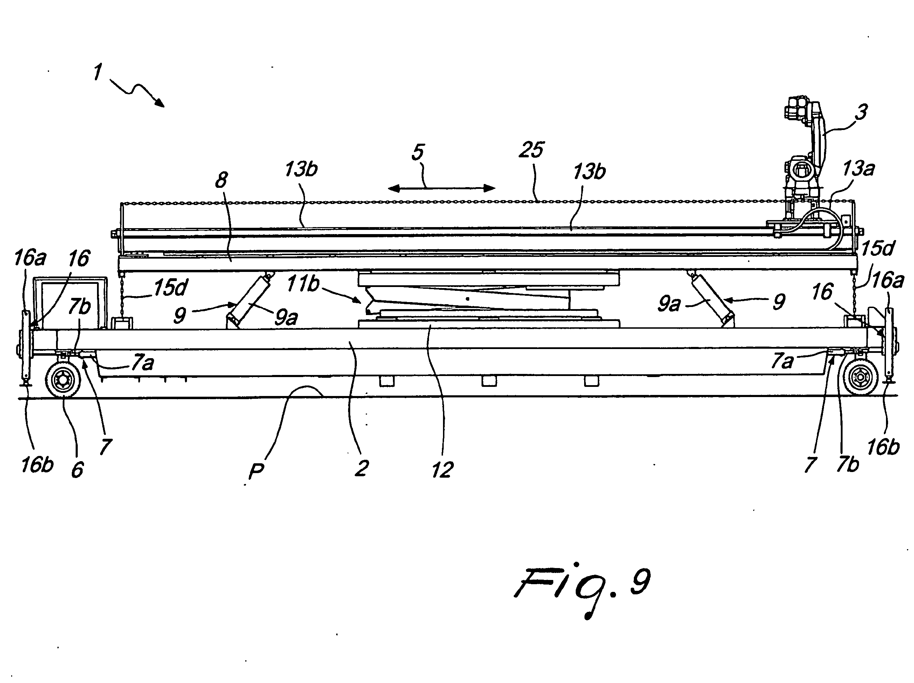

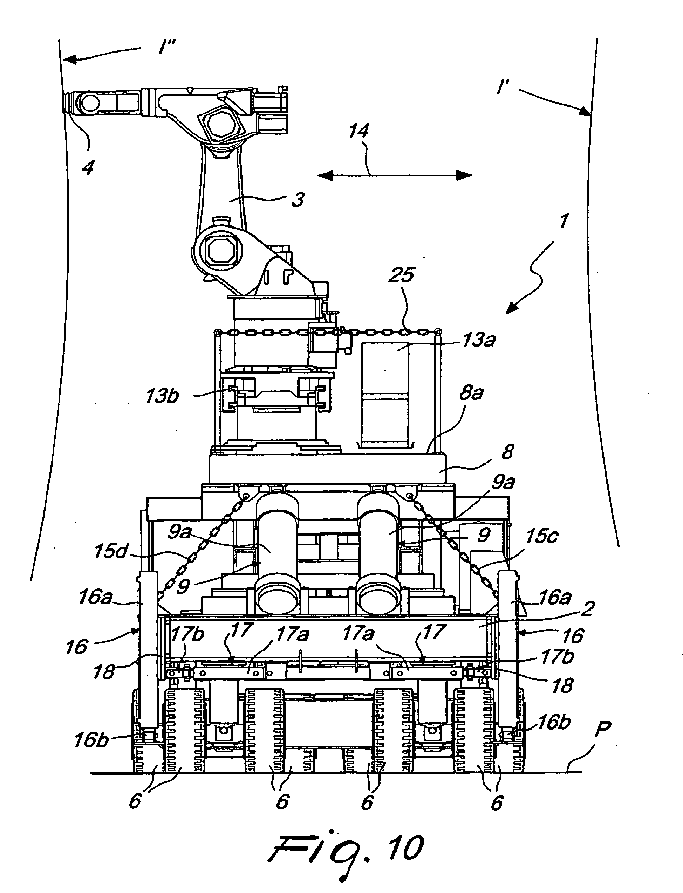

In a second embodiment, shown in Figures 9 and 10, the stabilizing means comprise at least one first chain 15c under tension, which is interposed between the supporting structure 3 and the supporting element 8, i.e., associated at one end with the supporting structure 3 and at the other end with the supporting element 8 and arranged inclined with respect to the supporting element in order to contrast the forces that act along the reaction direction 14 and are oriented from the worked surface of the first vessel I' toward the robot 3.

The first chain 15c can be unwound and wound at one of its ends so as to assist the movements of the supporting element 8 and is kept under tension, manually or automatically, in the lifting of the supporting element with respect to the supporting structure 3.

Advantageously, the stabilizing means comprise two first chains 15c which are mutually substantially aligned.

Preferably, the stabilizing means comprise at least one second chain 15d under tension, which is interposed between the supporting structure 3 and the supporting element 8, i.e., associated at one end with the supporting structure 3 and at the other end with the supporting element 8 and arranged substantially symmetrically with respect to the first chain 15c with respect to the longitudinal central plane of the supporting structure 2.

The second chain 15d is adapted to contrast the forces that act along the reaction direction 14 and are oriented from the worked surface of the second vessel I" toward the robot.

Also the second chain 15d can be unwound and wound at one of its ends in order to assist the movements of the supporting element 8 and is kept under tension, manually or automatically, in the lifting of the supporting element with respect to the supporting structure 2.

Conveniently, the stabilizing means comprise two second chains 15d which are substantially mutually aligned and preferably comprise at least two first chains 15c and at least two second chains 15d which are mutually respectively aligned and parallel.

Figures 9 and 10 also illustrate a safety chain 25 which is arranged on the supporting element 8 and surrounds the perimeter of the supporting surface 8a.

Advantageously, the device 1 comprises loading means which are associated with the supporting structure 3 and are adapted to lift the supporting structure in order to allow to load it on a means of transport, which is not shown in the figures.

More particularly, the loading means comprise at least one pair, preferably two pairs, of hydraulic cylinders 16, in each of which the body 16a is connected to the supporting structure 2 and the stem 16b of the corresponding piston can move from at least one passive configuration, in which it is raised with respect to the resting surface P in order to allow the movement of the supporting structure 2, to an active configuration, in which it rests on the resting surface P in order to lift the supporting structure 2, and vice versa.

More particularly, the hydraulic cylinders 16 of each pair are symmetrically arranged with respect to the longitudinal central plane of the supporting structure 2.

Advantageously, the device 1 comprises means for the mutual approach/spacing of at least some of the hydraulic cylinders 16, which are arranged so that their respective pistons are in a passive configuration, from a loading position, in which they are at the maximum mutual distance, to a working position, in which they are at the shortest mutual distance, and vice versa.

In the embodiments shown in Figures 1 to 10, the hydraulic cylinders 16 moved by the mutual approach/spacing means are the ones located at the longitudinal ends of the supporting structure 2.

More particularly, the mutual approach/spacing means comprise, for each hydraulic cylinder 16, a hydraulic cylinder 17 which is jointly associated, by means of its body 17a, with the supporting structure 2 and, by means of the stem 17b of the corresponding piston, with the body 16a of the corresponding hydraulic cylinder 16, which in turn is associated with a cross-member 18 which is slidingly inserted in an opening formed within the supporting structure 2.

The operation of the present invention is as follows.

The device 1 is moved within the shipyard by means of the wheels 6 and arranged so that it is laterally adjacent to the hull of the vessel I', I" to be worked, so that its longitudinal axis is substantially parallel to such vessel, so that the hull of the vessel I', I" lies within the range of action of the working means 4 of the robot 3.

The movements of the device 1 are guided by the hydraulic cylinders 7, the stems 7b of which, by acting on the connecting arms of each pair of wheels 6, cause the rotation of the corresponding pair of wheels 6 on which they act about the corresponding rotation axis.

Before performing surface work, the robot 3 is connected to a computer which feeds it with the mapping of the hull to be worked.

In this manner, the robot 3, once it has been moved proximate to the vessel I', I", is capable of performing automatically the necessary work.

The robot 3, in addition to hull mapping, must identify its own position with respect to the vessel I', I", so that by combining it with the mapping it is capable of performing the correct work in every region of its surface.

For this purpose, position sensors are arranged within the frame of the hull and are detected and identified by the robot 3, which in this manner recognizes its own position with respect to the vessel I', I" and by combining this position with the mapping received from the computer performs the work preset for the specific region in which it is located.

As an alternative, the robot 3 can recognize its own position with respect to the vessel I', I" by means of a laser triangulation system.

At this point, by appropriately changing the working means 4, the robot 3 is capable of performing various types of surface work, such as roughing, sanding, finishing and painting of the hull.

The various regions of the hull are reached by moving the robot 3 vertically by way of the lifting means and horizontally by way of the translational means.

Once the working of all the regions of the hull that can be accessed by the robot 3 by using only the lifting means and the translational means has ended, the supporting structure 2, and thus the robot 3, is moved by means of the wheels 6 so as to allow the robot to reach the regions of the hull that have not yet been worked.

These operations are repeated until the entire surface of the hull of the vessel I', I" is completed.

As described above, during the operation of the robot 3, reaction forces are generated which are oriented at right angles to the region being worked and toward the robot. The components of these reaction forces that are directed along the reaction direction 14 are contrasted by the stabilizing means, while the components that are perpendicular to the reaction direction 14 are contrasted by the lifting means, i.e., by the hydraulic cylinders 9.

The rotation of the robot 3 about itself, i.e., about a vertical axis, allows to perform the surface working of a first vessel I' and a second vessel I" arranged on opposite sides with respect to the device 1, without moving the supporting structure 2.

Once the working of the hull of the vessel I', I" to be worked has ended, the device 1 can again be moved, in order to position it at the opposite side of the hull or to transfer it to another shipyard, by means of the wheels 6.

If the device 1 has to be moved from one shipyard to another very distant one, it is possible to load the device 1 on ordinary means of transport, such as a truck, by using the loading means.

In order to be able to perform this operation, it is necessary first of all to move the hydraulic cylinders 16, which constitute the loading means in the embodiment shown in the figures, so that the corresponding stems 16b are in the passive configuration, in the corresponding loading position.

At this point, the stems 16b are gradually moved toward the active configuration, in which they rest on the resting surface P, lifting the supporting structure 2.

The extent of the lifting of the supporting structure 2 is such as to allow the passage of the bed of a truck below the wheels 6, said bed, thanks to the movement of the hydraulic cylinders 16 in the loading position, not interfering with their corresponding stems 16b.

The mutual distance of the stems 16b of two mutually aligned hydraulic cylinders 16 arranged on opposite sides with respect to the longitudinal central plane of the supporting structure 2 in the loading position, is conveniently greater than the width of the bed of an ordinary truck.

Once the device 1 has thus been loaded onto a truck, the hydraulic cylinders 16 are returned to the working position so as to reduce the space occupation of the device 1 transversely to its longitudinal extension.

The loading means, in addition to allowing to lift the supporting structure 2 in order to transport it, can also be used to increase the working height of the robot 3.

With the hydraulic cylinders 16 in the loading position and the corresponding stems 16b in the active configuration, it is in fact possible to arrange below the wheels 6 a rigid resting base which allows to lift the supporting structure 2 and accordingly the supporting surface 8a of the robot 3.

By performing this operation several times, it is possible to considerably increase the maximum working height that can be reached by the robot 3, consequently extending the range and type of vessel I', I" that the device 1 is capable of working.

In practice it has been found that the present invention achieves the proposed aim and objects, and in particular the fact is stressed that it allows to perform the surface working of medium-large vessels without the need to provide fixed structures within the shipyard.

The device according to the invention therefore allows to considerably reduce, with respect to known devices, the investment costs for performing the surface working of hulls of marine vessels.

Such device further allows to considerably reduce, with respect to known devices, the time required to work a hull.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A mobile device (1) for working hulls of marine vessels (I',I"), comprising:
- a supporting structure (2) having an elongated shape,
- means (6) for moving said supporting structure (2) on a resting surface (P) which lies outside the vessel (I',I"), said movement means (6) being directionally independent of said resting surface (P),
- at least one anthropomorphic robot (3) provided with means (4) for the surface working of the hull of a marine vessel (I',I"), which is supported by a supporting element (8) connected to said supporting structure (2), said supporting element (8) forming a supporting surface (8a) for said robot (3),
- means for lifting said supporting element (8) with respect to said supporting structure (2) which are interposed between said supporting element (8) and said supporting structure (2),
- means (13a,13b) for the translational motion of said robot (3) with respect to said supporting element (8) along a preset direction (5) substantially parallel to the longitudinal extension of said supporting structure (2), the device (1) being **characterized in that** it further comprises means (15a,15b;15c,15d) for stabilizing said supporting element which are interposed between said supporting element (8) and said supporting structure (2) and which are separate from said means for lifting and which are adapted to contrast forces which act along a reaction direction which is substantially parallel to said supporting surface (8a) and substantially perpendicular to said preset direction (5).

2. The device (1) according to claim 1, **characterized in that** said movement means are constituted by wheels (6).

3. The device (1) according to one or more of the preceding claims, **characterized in that** said stabilizing means comprise at least one first hydraulic actuator (15a), which is interposed between said supporting structure (2) and said supporting element (8) and is inclined with respect to said supporting surface (8a) so as to contrast the forces that act along said reaction direction and are oriented from the worked surface of a first vessel (I') toward said robot (3).

4. The device (I) according to claim 3, **characterized in that** said stabilizing means comprise at least one second hydraulic actuator (15b), which is interposed between said supporting structure (2) and said supporting element (8) and is arranged symmetrically with respect to said first actuator (15a) relative to the central longitudinal plane of said supporting structure (2), so as to contrast the forces that act along said reaction direction and are oriented from the worked surface of a second vessel (I"), which is arranged on the opposite side of the first vessel (I') with respect to said supporting structure (2), toward said robot (3).

5. The device (1) according to one or more of the preceding claims 1 to 2, **characterized in that** said stabilizing means comprise at least one first chain (15c) under tension, which is interposed between said supporting structure (2) and said supporting element (8) and is inclined with respect to said supporting surface (8a) in order to contrast the forces that act along said reaction direction and are oriented from the worked surface of a first vessel (I') toward said robot (3).

6. The device (1) according to claim 5, **characterized in that** said stabilizing means comprise at least one second chain (15d) under tension, which is interposed between said supporting structure (2) and said supporting element (8) and is arranged substantially symmetrically with respect to said first chain (15c) relative to the longitudinal central plane of said supporting structure (2), in order to contrast the forces that act along said reaction direction and are oriented from the worked surface of a second vessel (I"), arranged on the opposite side of the first vessel (I') with respect

7. The device (1) according to claim 1, **characterized in that** said means (13a,13b) for translational motion are interposed between said robot (3) and said supporting surface (8a).

8. The device (1) according to one or more of the preceding claims, **characterized in that** it comprises loading means (16) which are associated with said supporting structure (2) and are adapted to lift said supporting structure (2) in order to allow to load it onto a means of transport.

9. The device (1) according to claim 8, **characterized in that** said loading means comprise at least one pair of hydraulic cylinders (16), each of which has its own body (16a) associated with said supporting structure (2) and the stem (16b) of the corresponding piston which can move from at least one passive configuration, in which it is raised with respect to said resting surface (P) in order to allow the movement of said supporting structure (2), to at least one active configuration, in which it rests on said resting surface (P) in order to lift said supporting structure (2), and vice versa, the hydraulic cylinders (16) of each pair of said at least one pair being arranged symmetrically with respect to the longitudinal central plane of said supporting structure (2).

10. The device according to claim 9, **characterized in that** it comprises means (17) for the mutual approach/spacing of at least some of the hydraulic cylinders (16) of said loading means from a loading position, in which they are at the maximum mutual distance, to an active position, in which they are at the minimum mutual distance, and vice versa.

## Patentansprüche

1. Eine mobile Vorrichtung (1) zum Bearbeiten von Wasserfahrzeughüllen (I', I"), aufweisend:
- eine Tragkonstruktion (2), die eine längliche Form hat,
- Vorrichtungen (6) zum Bewegen der Tragkonstruktion (2) auf einer ruhenden Oberfläche (P), die außerhalb des Fahrzeugs (I', I") liegt, wobei die Bewegungsvorrichtungen (6) von der ruhenden Oberfläche (P) richtungsunabhängig sind,
- mindestens einen anthropomorphen Roboter (3), der mit Vorrichtungen (4) für die Oberflächenbearbeitung der Hülle eines Wasserfahrzeugs (I', I") versehen ist, der von einem mit der Tragkonstruktion (2) verbundenen Tragelement (8) getragen wird, wobei das Tragelement (8) eine tragende Fläche (8a) für den Roboter (3) bildet,
- Vorrichtungen zum Heben des Tragelements (8) in Bezug auf die Tragkonstruktion (2), die zwischen das Tragelement (8) und die Tragkonstruktion (2) eingefügt sind,
- Vorrichtungen (13a, 13b) für die Verfahrbewegung des Roboters (3) in Bezug auf das Tragelement (8) entlang einer vorgegebenen Richtung (5) im Wesentlichen parallel zur Längsausdehnung der Tragkonstruktion (2), wobei die Vorrichtung (1) **dadurch gekennzeichnet ist, dass** sie ferner Vorrichtungen (15a, 15b; 15c, 15d) zum Stabilisieren des Tragelements aufweist, die zwischen das Tragelement (8) und die Tragkonstruktion (2) eingefügt und von den Vorrichtungen zum Heben getrennt sind und die angepasst sind, Kräften entgegenzuwirken, die entlang einer Reaktionsrichtung im Wesentlichen parallel zur tragenden Fläche (8a) und im Wesentlichen senkrecht zur vorgegebenen Richtung (5) wirken.

2. Vorrichtung (1) gemäß Anspruch 1, **dadurch gekennzeichnet, dass** die Bewegungsvorrichtungen durch Räder (6) gebildet werden.

3. Vorrichtung (1) gemäß einem oder mehr der vorangegangenen Ansprüche, **dadurch gekennzeichnet, dass** die stabilisierenden Vorrichtungen mindestens ein erstes hydraulisches Stellorgan (15a) aufweisen, das zwischen die Tragkonstruktion (2) und das Tragelement (8) eingefügt und in Bezug auf die tragende Fläche (8a) geneigt ist, um den Kräften entgegenzuwirken, die entlang der Reaktionsrichtung wirken und die von der bearbeiteten Oberfläche eines ersten Fahrzeugs (I') aus gegen den Roboter (3) gerichtet sind.

4. Vorrichtung (1) gemäß Anspruch 3, **dadurch gekennzeichnet, dass** die stabilisierenden Vorrichtungen mindestens ein zweites hydraulisches Stellorgan (15b) aufweisen, das zwischen die Tragkonstruktion (2) und das Tragelement (8) eingefügt und symmetrisch zum ersten hydraulischen Stellorgan (15a) relativ zur mittleren Längsebene der Tragkonstruktion (2) angeordnet ist, um den Kräften entgegenzuwirken, die entlang der Reaktionsrichtung wirken und die von der bearbeiteten Oberfläche eines zweiten Fahrzeugs (I") aus, das in Bezug auf die Tragkonstruktion (2) auf der gegenüberliegenden Seite des ersten Fahrzeugs (I') angeordnet ist, gegen den Roboter (3) gerichtet sind.

5. Vorrichtung (1) gemäß einem oder mehr der vorangegangenen Ansprüche 1 bis 2, **dadurch gekennzeichnet, dass** die stabilisierenden Vorrichtungen mindestens eine erste unter Spannung stehende Kette (15c) aufweisen, die zwischen die Tragkonstruktion (2) und das Tragelement (8) eingefügt und in Bezug auf die tragende Fläche (8a) geneigt ist, um den Kräften entgegenzuwirken, die entlang der Reaktionsrichtung wirken und die von der bearbeiteten Oberfläche eines ersten Fahrzeugs (I') aus gegen den Roboter (3) gerichtet sind.

6. Vorrichtung (1) gemäß Anspruch 5, **dadurch gekennzeichnet, dass** die stabilisierenden Vorrichtungen mindestens eine zweite unter Spannung stehende Kette (15d) aufweisen, die zwischen die Tragkonstruktion (2) und das Tragelement (8) eingefügt und im Wesentlichen symmetrisch zur ersten Kette (15c) relativ zur mittlere Längsebene der Tragkonstruktion (2) angeordnet ist, um den Kräften entgegenzuwirken, die entlang der Reaktionsrichtung wirken und die von der bearbeiteten Oberfläche eines zweiten Fahrzeugs (I") aus, das in Bezug auf die Tragkonstruktion (2) auf der gegenüberliegenden Seite des ersten Fahrzeugs (I') angeordnet ist, gegen den Roboter (3) gerichtet sind.

7. Vorrichtung (1) gemäß Anspruch 1, **dadurch gekennzeichnet, dass** die Vorrichtungen (13a, 13b) für die Verfahrbewegung zwischen den Roboter und die tragende Fläche (8a) eingefügt sind.

8. Vorrichtung (1) gemäß einem oder mehr der vorangegangenen Ansprüche, **dadurch gekennzeichnet, dass** sie Ladevorrichtungen (16) aufweist, die mit der Tragkonstruktion (2) verbunden und angepasst sind, die Tragkonstruktion (2) zu heben, um zu erlauben, dass sie auf ein Transportmittel geladen wird.

9. Vorrichtung (1) gemäß Anspruch 8, **dadurch gekennzeichnet, dass** die Ladevorrichtungen mindestens ein Paar Hydraulikzylinder (16) aufweisen, bei denen jeweils der Körper (16a) mit der Tragkonstruktion (2) verbunden ist und die Stange (16b) des entsprechenden Kolbens sich aus mindestens einer passiven Konfiguration, in der sie in Bezug auf die ruhende Oberfläche (P) angehoben wird, um die Bewegung der Tragkonstruktion (2) zu erlauben, in mindestens eine aktive Konfiguration, in der sie auf der ruhenden Oberfläche (P) ruht, um die Tragkonstruktion (2) zu heben, und umgekehrt bewegen kann, wobei die Hydraulikzylinder (16) jedes Paars des mindestens einen Paars symmetrisch zur mittleren Längsebene der Tragkonstruktion (2) angeordnet sind.

10. Vorrichtung gemäß Anspruch 9, **dadurch gekennzeichnet, dass** sie Vorrichtungen (17) für das Annähern / Entfernen zu-/voneinander mindestens einiger der Hydraulikzylinder (16) der Ladevorrichtungen aus einer Ladestellung, in der sie den größten Abstand voneinander haben, in eine aktive Stellung, in der sie den kleinsten Abstand voneinander haben, und umgekehrt aufweisen.

## Revendications

1. Dispositif mobile (1) pour effectuer des travaux sur les coques des navires (I', I"), comprenant:
- une structure de support (2) qui a une forme allongée
- des moyens (6) pour déplacer ladite structure de support (2) sur une surface d'appui (P) qui est étendue à l'extérieur du navire (I', I"), lesdits moyens de déplacement (6) étant disposés selon une direction indépendante par rapport à ladite surface d'appui (P),
- au moins un robot anthropomorphe (3) pourvu de moyens (4) pour effectuer des travaux sur la surface de la coque d'un navire (I', I"), qui est supporté par un élément de support (8) lié à ladite structure de support (2), ledit élément de support (8) formant une surface de support (8a) pour ledit robot (3),
- des moyens pour soulever ledit élément de support (8) par rapport à ladite structure de support (2) qui sont interposés entre ledit élément de support (8) et ladite structure de support (2),
- des moyens (13a, 13b) pour le mandement en translation dudit robot (3) par rapport audit élément de support (8) le long d'une direction préétablie (5) sensiblement parallèle à l'extension longitudinale de ladite structure de support (2), le dispositif (1) étant ***caractérisé en ce qu*'**il comprend aussi des moyens (15a, 15b; 15c, 15d) pour la stabilisation dudit élément de support qui sont interposés entre ledit élément de support (8) et ladite structure de support (2) et qui sont séparés desdits moyens de soulèvement et qui sont adaptés à contraster des forces qui agissent le long d'une direction de réaction qui est sensiblement parallèle à ladite surface de support (8a) et sensiblement perpendiculaire à ladite direction préétablie (5).

2. Le dispositif (1) selon la revendication 1, ***caractérisé en ce que*** lesdits moyens de déplacement sont constitués par des roues (6).

3. Le dispositif (1) selon l'une ou plusieurs des revendications précédentes, ***caractérisé en ce que*** lesdits moyens de stabilisation comprennent au moins un premier vérin hydraulique (15a), qui est interposé entre ladite structure de support (2) et ledit élément de support (8) et est incliné par rapport à ladite surface de support (8a) de manière à s'opposer aux forces qui agissent le long de ladite direction de réaction et sont orientées de la surface de travail d'un premier navire (I') vers ledit robot (3).

4. Le dispositif (I) selon la revendication 3, ***caractérisé en ce que*** lesdits moyens de stabilisation comprennent au moins un deuxième vérin hydraulique (15b), qui est interposé entre ladite structure de support (2) et ledit élément de support (8) et est disposé symétriquement par rapport audit premier vérin (15a) par rapport au plan longitudinal de ladite structure de support (2), afin de s'opposer aux forces qui agissent le long de ladite direction de réaction et sont orientées de la surface de travail d'un deuxième navire (I"), qui est disposé sur le côté opposé du premier navire (I') par rapport à ladite structure de support (2), vers ledit robot (3).

5. Le dispositif (1) selon l'une ou plusieurs des revendications de la 1 à la 2, ***caractérisé en ce que*** lesdits moyens de stabilisation comprennent au moins une première chaîne (15c) sous tension, qui est interposée entre ladite structure de support (2) et ledit élément de support (8) et est inclinée par rapport à ladite surface de support (8a), afin de s'opposer aux forces qui agissent le long de ladite direction de réaction et sont orientés de la surface de travail d'un premier navire (I') vers ledit robot (3).

6. Le dispositif (1) selon la revendication 5, ***caractérisé en ce que*** lesdits moyens de stabilisation comprennent au moins une deuxième chaîne (15d) sous tension, qui est interposée entre ladite structure de support (2) et ledit élément de support (8) et est disposée sensiblement symétriquement par rapport à ladite première chaîne (15c) par rapport au plan central longitudinal de ladite structure de support (2), afin de s'opposer aux forces qui agissent le long de ladite direction de réaction et sont orientés de la surface de travail d'un deuxième navire (I"), disposé sur le côté opposé du premier navire (I') par rapport à ladite structure de support (2), vers ledit robot (3).

7. Le dispositif (1) selon la revendication 1, ***caractérisé en ce que*** lesdits moyens (13a, 13b) pour le mouvement de translation sont interposés entre ledit robot (3) et ladite surface de support (8a).

8. Le dispositif (1) selon l'une ou plusieurs des revendications précédentes, ***caractérisé en* ce *qu*'**il comprend des moyens de chargement (16) qui sont associés à ladite structure de support (2) et sont adaptés à soulever ladite structure de support (2) afin de pouvoir le charger sur un moyen de transport.

9. Le dispositif (1) selon la revendication 8, ***caractérisé en ce que*** lesdits moyens de chargement comprennent au moins une paire de vérins hydrauliques (16), dont chacun a son propre corps (16a) associé à ladite structure de support (2) et la tige (16b) du piston correspondant qui peut se déplacer d'au moins une configuration passive, dans laquelle elle est élevée par rapport à ladite surface d'appui (P) afin de permettre la circulation de ladite structure de support (2), à au moins une configuration active, dans laquelle elle s'appuie sur ladite surface d'appui (P) afin de soulever ladite structure de support (2), et vice versa, les vérins hydrauliques (16) de chaque paire desdites au moins une paire étant disposés symétriquement par rapport au plan central longitudinal de ladite structure de support (2).

10. Le dispositif selon la revendication 9, ***caractérisé en ce qu*'**il comprend des moyens (17) pour le rapprochement/espacement mutuel d'au moins une partie des vérins hydrauliques (16) desdits moyens de chargement à partir d'une position de chargement, dans laquelle ils sont distancés au maximum entre eux, à une position active, dans laquelle ils sont distancés au minimum entre eux, et vice versa.
